# EUROPEAN PATENT SPECIFICATION

(11) **EP 3 346 540 B1**
(45) Date of publication and mention of the grant of the patent: **10.03.2021**
(21) Application number: 16841787.1
(22) Date of filing: 29.08.2016
(51) Int. Cl.: H01M 10/0569, H01M 4/58, H01M 4/587, H01M 10/052, H01M 10/054, H01M 10/0568, H01M 4/131, H01M 4/133, H01M 4/134, H01M 4/136

(54) **FLAME-RESISTANT ELECTROLYTE FOR SECONDARY CELL, AND SECONDARY CELL INCLUDING SAID ELECTROLYTE**
FLAMMFESTER ELEKTROLYT FÜR SEKUNDÄRZELLE UND SEKUNDÄRZELLE MIT DEM ELEKTROLYTEN
ÉLECTROLYTE IGNIFUGE POUR PILE RECHARGEABLE ET PILE RECHARGEABLE COMPRENANT LEDIT ÉLECTROLYTE

(30) Priority: 02.09.2015 JP 2015172725
(43) Date of publication of application: 11.07.2018
(73) Proprietor: The University Of Tokyo, Tokyo 113-8654 (JP)
(72) Inventor: YAMADA, Atsuo, Tokyo 113-8654 (JP); YAMADA, Yuki, Tokyo 113-8654 (JP); WANG, Jianhui, Tokyo 113-8654 (JP)
(74) Representative: Gille Hrabal
(86) International application number: PCT/JP2016/075172
(87) International publication number: WO 2017/038755

(56) References cited:
- WO-A1-2010/030008
- WO-A1-2012/029551
- JP-A- 2005 243 620
- US-A1- 2005 164 082
- US-A1- 2011 070 504

## Description

### Technical Field

The present invention relates to a flame-retardant electrolyte solution for a secondary battery, in particular, an electrolyte solution containing a phosphate triester as a main solvent, and a secondary battery containing the electrolyte solution.

### Background Art

Lithium ion batteries having a high energy density are expected to be widely spread as large-sized storage batteries such as uses in electric vehicles and power storage, in addition to use in small portable devices such as mobile phones and laptop computers, but in recent years, a secondary battery that can be manufactured at a lower cost is required.

For that reason, researches on next generation secondary batteries having a high energy density exceeding that of lithium ion secondary batteries have been actively done, and various attempts have been made. Among them, since sodium ion batteries use sodium that is cheap, safe, and abundant in resources, as compared to lithium classified as rare metals, it is expected to have a possibility of considerably lowering costs compared to lithium ion secondary batteries, thus the sodium ion batteries are regarded as a promising candidate for next generation storage batteries. However, such sodium ion batteries have problems of low charge/discharge cycle stability (reversibility) and insufficient safety.

More specifically, in sodium ion batteries, hard carbon (hardly graphitizable carbon and the like) is generally used as the negative electrode material (for example, Patent Literature 1), but it is known that the reaction reversibility is low, and it is considered that the factor of low charge/discharge cycle stability is mainly in the negative electrode. Also, in sodium ion batteries, sodium metal can be generated due to overcharge or the like, but such sodium metal is extremely reactive and risk of ignition and the like are concerned, and in order to realize a high safety sodium ion battery, it is necessary to use a flame-retardant electrolyte solution. Even in lithium ion batteries, there is a risk of ignition when electrolyte solution leakage or the like occurs. However, at present, no electrolyte solution that is such poorly soluble secondary battery electrolyte solution system, and also has excellent battery characteristics has been realized so far.

US 2005/164082 A1 discloses a nonaqueous electrolyte battery comprising an electrolyte containing molten salt, ester phosphate and metal salt including at least one of alkaline metal salt and alkaline earth metal salt, and the electrolyte satisfying the formula 0.5≤(M₂/M₁) ≤1. M₁ is a molar number of the metal salt and M₂ is the molar number of the ester phosphate. The ester phosphate includes trimethyl phosphate and triethyl phosphate. The alkaline metal salt includes lithium bis(trifluoromethane sulfonyl) amide and lithium bis(pentafluroroethane sulfonyl) amide.

### Citation List

### Patent Literatures

Patent Literature 1: JP 2009-266821 A

### Summary of Invention

### Technical Problem

Accordingly, an object of the present invention is to provide a highly safe electrolyte solution system using a flame-retardant solvent as a main solvent and can provide excellent battery characteristics, as an electrolyte solution for a secondary battery such as sodium ion batteries.

### Solution to Problem

As a result of extensive studies to solve the above problems, the present inventors have found that excellent battery characteristics can be obtained by using an electrolyte solution containing a high-concentration alkali metal salt in a flame-retardant organic solvent, and more specifically, newly found that a reversible battery reaction can be obtained even in a sodium ion battery using hard carbon as a negative electrode, thereby completing the present invention.

That is, the present invention provides, in one aspect,
(1) an electrolyte solution for a secondary battery containing a flame-retardant organic solvent as a main solvent and an alkali metal salt, the composition of the electrolyte solution being such that the solvent amount is 4 mol or less per 1 mol of the alkali metal salt
   the ratio of the flame-retardant organic solvent in the total solvent is 50 to 100 mol%,
   the flame-retardant organic solvent is a phosphate triester, and
   an anion constituting the alkali metal salt is bis(fluorosulfonyl)amide ([N(FSO₂)₂]⁻);
(2) the electrolyte solution for a secondary battery according to (1) above, the flame-retardant organic solvent being trimethyl phosphate or triethyl phosphate;
(3) the electrolyte solution for a secondary battery according to any one of (1) or (2) above, the alkali metal salt being a lithium salt or a sodium salt;
(4) the electrolyte solution for a secondary battery according to any one of (1) to (3) above, the secondary battery being a lithium ion secondary battery or a sodium ion secondary battery.
   In another aspect, the present invention provides
(5) a secondary battery including a positive electrode, a negative electrode, and the electrolyte solution for a secondary battery according to any one of (1) to (4) above;
(6) the secondary battery according to (5) above, which is a sodium ion secondary battery;
(7) the secondary battery according to (6) above, wherein the positive electrode is a transition metal oxide;
(8) the secondary battery according to (6) above, wherein the negative electrode is hard carbon;
(9) the secondary battery according to (5) above, which is a lithium ion secondary battery;
(10) the secondary battery according to (9) above, wherein the positive electrode contains an active material selected from a metal oxide having a lithium element, a polyanion-based compound, or a sulfur-based compound; and
(11) the secondary battery according to (9) or (10) above, wherein the negative electrode contains an active material selected from a carbon material, metal lithium, lithium alloy, or lithium metal oxide.

### Advantageous Effects of Invention

According to the present invention, even when a flame-retardant organic solvent conventionally considered to have an adverse effect on the reversibility of the charge-discharge reaction is used as a main solvent (furthermore, a single solvent), an effect of obtaining an extremely reversible battery reaction is exhibited. Thus, for example, even when overcharging of the sodium ion battery or the like is performed, the risk of ignition can be avoided, and it is possible to construct a secondary battery having excellent battery characteristics such as high safety and long life.

In particular, since the electrolyte solution of the present invention can provide improved reaction reversibility also in the hard carbon negative electrode as described above, the charge/discharge reversibility, which was the greatest problem of sodium ion batteries so far, is raised to the same level as that of lithium ion batteries, and contributes greatly to practical use of sodium ion batteries, and it can be said that the industrial utility value is extremely high.

### Brief Description of Drawings

Fig. 1 is a graph showing a charge-discharge curve in a hard carbon electrode when using a NaFSA/TMP electrolyte solution (1 : 2).
Fig. 2 is a graph showing a charge-discharge curve in a hard carbon electrode when using a NaFSA/TMP electrolyte solution (1 : 3).
Fig. 3 is a graph showing a charge-discharge curve in a hard carbon electrode when using a NaFSA/TMP electrolyte solution (1 : 8).
Fig. 4 is a graph showing a comparison of charge/discharge cycle characteristics when using a NaFSA/TMP electrolyte solution and when using 1 mol/L NaPF_{6/}EC:DMC electrolyte solution.
Fig. 5 is a graph showing cycle characteristics of Coulombic efficiency when using a NaFSA/TMP electrolyte solution.

### Description of Embodiments

Hereinafter, embodiments of the present invention will be described.

### 1. Electrolyte Solution

### (1) Flame-Retardant Organic Solvent

The electrolyte solution for a secondary battery of the present invention is characterized by using a flame-retardant organic solvent, which is a phosphate triester, as a main solvent. Herein, the "flame-retardant organic solvent" means an organic solvent that is a phosphate triester and has a high flash point and high ignition point, and does not easily catch fire or ignite.

The flame-retardant organic solvent is present in the largest ratio in the total solvent, and is present at a ratio of 50 to 100 mol%. Particularly preferably, the flame-retardant organic solvent is used as a single solvent (i.e., 100 weight%).

Such flame-retardant organic solvent is a phosphate triester, and examples thereof include trimethyl phosphate and triethyl phosphate. Here, trimethyl phosphate is generally used as a flame retardant, and it is generally known that flame retardancy is exhibited when trimethyl phosphate is contained in 10 to 30 mol% or more (Wang et al., J. Electorochem. Soc., 148, A1058, 2001).

The electrolyte solution for a secondary battery of the present invention also can be a mixed solvent containing a solvent other than the flame-retardant organic solvent, as the case may be. As such other solvent, for example, nonaqueous solvents such as ethers such as ethyl methyl ether and dipropyl ether; nitriles such as methoxypropionitrile; esters such as methyl acetate; amines such as triethylamine; alcohols such as methanol; ketones such as acetone; fluorine-containing alkanes; and the like can be preferably used. For example, aprotic organic solvents such as 1,2-dimethoxyethane, acetonitrile, tetrahydrofuran, dimethyl sulfoxide, γ-butyrolactone, and sulfolane can be also used. Even when such other solvent is used, a poorly soluble solvent is used as the main solvent, as described above.

### (2) Alkali Metal Salt

Further, the electrolyte solution for a secondary battery of the present invention includes a high-concentration alkali metal salt, the anion constituting the alkali metal salt being bis(fluorosulfonyl)amide ([N(FSO₂)₂]⁻). Consequently, a secondary battery showing excellent reversibility can be realized, even in an electrode configuration that conventionally could not operate reversibly in a poorly soluble solvent system electrolyte solution. The mixing ratio of the alkali metal salt and the solvent in the electrolyte solution is such that the solvent amount is 4 mol or less, preferably 3 mol or less, and more preferably 2 mol or less, per 1 mol of the alkali metal salt. With respect to the lower limit of the solvent amount, there is no particular limitation as long as the precipitation of the alkali metal salt or the like does not occur and the electrochemical reaction in the positive electrode and the negative electrode progresses, but for example, it is preferably 1 mol or more of the solvent per 1 mol of the alkali metal salt and preferably 2 mol or more of the solvent per 1 mol of the alkali metal salt.

The alkali metal salt used in the electrolyte solution for a secondary battery of the present invention is preferably a lithium salt or a sodium salt. Depending on the type of secondary battery using the electrolyte solution of the present invention, for example, a lithium salt is preferable when the secondary battery is a lithium ion battery, and a sodium salt is preferable when the secondary battery is a sodium ion battery. Mixtures of two or more kinds of alkali metal salts can also be used.

The anion constituting the alkali metal salt is bis (fluorosulfonyl) amide ([N(FSO₂)₂]⁻).

Accordingly, specific examples of the alkali metal salt include lithium bis(fluorosulfonyl)amide (LiFSA or sodium bis(fluorosulfonyl)amide (NaFSA).

In addition to these alkali metal salts, a supporting electrolyte known in the art can be contained. Examples of such supporting electrolyte include those selected from LiPF₆, LiBF₄, LiClO₄, LiNO₃, LiCl, Li₂SO₄, Li₂S, and the like and any combinations thereof when the secondary battery is a lithium ion battery.

### (3) Other Components

Also, the electrolyte solution for a secondary battery of the present invention can contain other components as needed for the purpose of improving the function thereof. Examples of the other component include conventionally known overcharge inhibitors, dehydrating agents, deoxidizing agents, characteristics improvement aids for improving the capacity retention characteristics after high-temperature storage and cycle characteristics.

Examples of the overcharge inhibitors include aromatic compounds such as biphenyl, alkylbiphenyl, terphenyl, partially hydrogenated products of terphenyl, cyclohexylbenzene, t-butylbenzene, t-amylbenzene, diphenyl ether, and dibenzofuran; partially fluorinated compounds of the aromatic compounds such as 2-fluorobiphenyl, o-cyclohexyl fluorobenzene, and p-cyclohexyl fluorobenzene; and fluorine-containing anisole compounds such as 2,4-difluoroanisole, 2,5-difluoroanisole, and 2,6-difluoroaniol. With regard to the overcharge inhibitors, one kind of overcharge inhibitor may be used singly, and two or more kinds may be used together.

When the electrolyte solution contains an overcharge inhibitor, the content of the overcharge inhibitor in the electrolyte solution is preferably 0.01 to 5 mass%. When the overcharge inhibitor is contained in the electrolyte solution by 0.1 mass% or more, prevention of rupture and ignition of a secondary battery due to overcharge becomes easier, and the secondary battery can be more stably used.

Examples of the dehydrating agents include molecular sieves, sodium sulfate, magnesium sulfate, calcium hydride, sodium hydride, potassium hydride, lithium aluminum hydride, and the like. As a solvent to be used for the electrolyte solution of the present invention, it is also possible to use one subjected to rectification after dehydrating with the dehydrating agent. Alternatively, a solvent that has been subjected only to dehydration with the dehydrating agent without rectification may be used.

Examples of the characteristics improvement aids for improving capacity retention characteristics after high-temperature storage or cycle characteristics include carboxylic anhydrides such as succinic anhydride, glutaric anhydride, maleic anhydride, citraconic anhydride, glutaconic anhydride, itaconic anhydride, diglycolic anhydride, cyclohexane dicarboxylic anhydride, cyclopentane tetracarboxylic dianhydride, and phenylsuccinic anhydride; sulfur-containing compounds such as ethylene sulfite, 1,3-propanesultone, 1,4-butanesultone, methyl methanesulfonate, busulfan, sulfolane, sulfolene, dimethyl sulfone, diphenyl sulfone, methylphenyl sulfone, dibutyl disulfide, dicyclohexyl disulfide, tetramethylthiuram monosulfide, N,N-dimethyl methanesulfonamide, and N,N-diethyl methanesulfonamide; nitrogen-containing compounds such as 1-methyl-2-pyrrolydinone, 1-methyl-2-piperidone, 3-methyl-2-oxazolidinone, 1,3-dimethyl-2-imidazolidinone, and N-methylsuccinimide; hydrocarbon compounds such as heptane, octane, and cycloheptane; fluorine-containing aromatic compounds such as fluoroethylene carbonate (FEC), fluorobenzene, difluorobenzene, hexafluorobenzene, and benzotrifluoride. One kind of these characteristics improvement aids may be used singly, and two or more kinds may be used together. When the electrolyte solution contains a characteristics improvement aid, the content of the characteristics improvement aid in the electrolyte solution is preferably 0.01 to 5 mass%.

### 2. Secondary Battery

The secondary battery of the present invention includes a positive electrode and a negative electrode, and the electrolyte solution of the present invention.

### (1) Negative Electrode

As the negative electrode in the secondary battery of the present invention, an electrode configuration known in the art can be used. When the secondary battery is a lithium ion battery, examples of the negative electrode include electrodes containing a negative electrode active material capable of electrochemically storing and releasing lithium ions. As such negative electrode active material, a known negative electrode active material for a lithium ion secondary battery can be used, and examples thereof include carbonaceous materials such as natural graphite (graphite), highly oriented graphite (Highly Oriented Pyrolytic Graphite; HOPG), and amorphous carbon. Still other examples include metal compounds such as lithium metals, or alloys, metal oxides, metal sulfides, and metal nitrides containing a lithium element. Examples of the alloys having a lithium element include lithium aluminum alloy, lithium tin alloy, lithium lead alloy, lithium silicon alloy, and the like. Also, examples of the metal oxides having a lithium element include lithium titanate (Li₄Ti₅O₁₂ and the like) and the like. Further, examples of the metal nitrides containing a lithium element include lithium cobalt nitride, lithium iron nitride, lithium manganese nitride, and the like. One kind of these negative electrode active materials may be used singly, or two or more kinds may be used together. Among them, lithium titanate is preferable as the negative electrode active material.

When the secondary battery is a sodium ion battery, an electrode containing a negative electrode active material capable of electrochemically storing and releasing sodium ions can be used. As such negative electrode active material, a known negative electrode active material for a sodium ion secondary battery can be used, and examples thereof include carbonaceous materials such as hard carbon, soft carbon, carbon black, ketjen black, acetylene black, activated carbon, carbon nanotube, carbon fiber, and amorphous carbon. Also usable are sodium ion metals, or alloys, metal oxides, and metal nitrides containing a sodium ion element. Among them, as the negative electrode active material, a carbonaceous material such as hard carbon having a disordered structure is preferable.

The negative electrode may contain only the negative electrode active material, and may contain at least one of a conductive material and a binder in addition to the negative electrode active material, and may be in a form in which the contents are adhered as a negative electrode mixture on a negative electrode collector. For example, when the negative electrode active material is in foil form, a negative electrode containing only the negative electrode active material can be made. Meanwhile, when the negative electrode active material is in powder form, a negative electrode having the negative electrode active material and a binder can be made. The method used for forming the negative electrode using a powder-form negative electrode active material can be a doctor blade method, molding by crimping press, or the like.

As the conductive material, for example, a carbon material, a conductive fiber such as a metal fiber, a metal powder of copper, silver, nickel, aluminum, or the like, or an organic conductive material such as a polyphenylene derivative can be used. As the carbon material, graphite, soft carbon, hard carbon, carbon black, ketjen black, acetylene black, graphite, activated carbon, carbon nanotube, carbon fiber, or the like can be used. Further, a synthetic resin containing an aromatic ring, mesoporous carbon obtained by firing a petroleum pitch or the like can also be used.

As the binder, for example, a fluororesin such as polyvinylidene fluoride (PVDF), polytetrafluoroethylene (PTFE), or ethylene tetrafluoroethylene (ETFE), polyethylene, polypropylene, or the like can be preferably used. As the negative electrode collector, a rod-shaped body, sheet-shaped body, foil-shaped body, or net-shaped body consisting mainly of copper, nickel, aluminum, stainless steel, or the like can be used.

### (2) Positive Electrode

As the positive electrode of the secondary battery of the present invention, an electrode configuration known in the art can be used. For example, when the secondary battery is a lithium ion battery, the positive electrode active material includes lithium-containing transition metal oxides containing one or more transition metals, such as lithium cobalt oxide (LiCoO₂), lithium manganate (LiMn₂O₄), and lithium nickelate (LiNiO₂), transition metal sulfides, metal oxides, lithium-containing polyanion-based compounds containing one or more transition metals, such as lithium iron phosphate (LiFePO₄) and lithium iron pyrophosphate (Li₂FeP₂O₇), sulfur-based compounds (Li₂S), and the like. The positive electrode may contain a conductive material or a binder and may contain a catalyst that accelerates the oxidation-reduction reaction of oxygen. Preferably, the catalyst is lithium manganate. Also when the secondary battery is a sodium ion battery, a known positive electrode active material can be similarly used.

As the conductive material and the binder, the same as those for the above negative electrode can be used.

As a catalyst, MnO₂, Fe₂O₃, NiO, CuO, Pt, Co, or the like can be used. As the binder, a binder similar as for the above negative electrode can be used.

As the positive electrode collector, a porous body such as a mesh (grid)-like metal, a sponge-like (foamed) metal, a punched metal, or an expanded metal is used for increasing oxygen diffusion. The metal is, for example, copper, nickel, aluminum, stainless steel, or the like.

### (3) Separator

The separator used in the secondary battery of the present invention is not particularly limited as long as it has a function of electrically separating the positive electrode layer and the negative electrode layer, but examples thereof include porous insulating materials such as porous sheets including polyethylene (PE), polypropylene (PP), polyester, cellulose, polyamide, or the like and nonwoven cloths such as nonwoven cloths and glass fiber nonwoven cloths, and the like.

### (4) Shape, etc.

The shape of the secondary battery of the present invention is not particularly limited as long as the positive electrode, the negative electrode and the electrolyte solution can be housed, and examples thereof include cylindrical, coin shaped, flat plate type, laminated configurations, and the like.

Furthermore, a case for housing the battery may be an atmosphere-exposed type battery case, or may be a sealed type battery case. The atmosphere-exposed type battery case is a battery case having a ventilation hole through which air may move in and out, enabling air to make contact with the air electrode. On the other hand, when the battery case is a sealed type battery case, a supply tube and an emission tube for gas (air) are preferably formed on the sealed type battery case. In this case, it is preferable that the gas to be supplied/discharged is a dry gas, and in particular, it is preferable that the oxygen concentration is high, and pure oxygen (99.99%) is more preferable. Furthermore, the oxygen concentration is preferably set high during discharging and set low during charging.

Although the electrolyte solution and the secondary battery of the present invention are suitable in use as a secondary battery, usage as a primary battery is not excluded.

### EXAMPLES

The present invention is described in further detail below using examples.

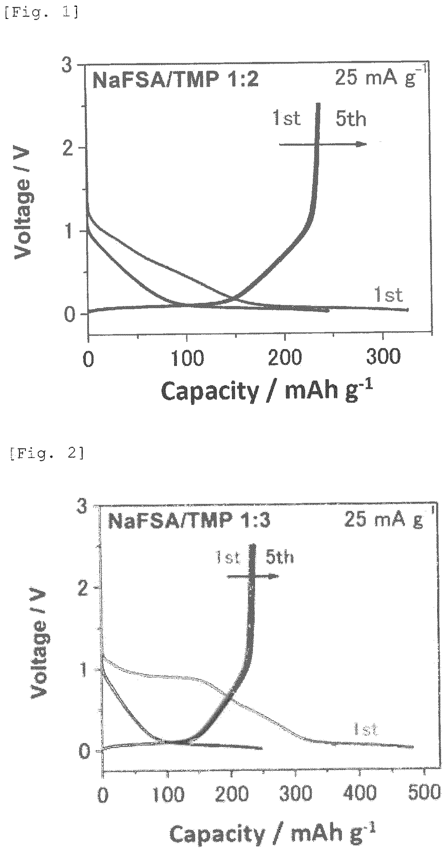

In order to demonstrate the usefulness of the electrolyte solution of the present invention, constant current charge/discharge measurement of the hard carbon electrode was performed, using a solution in which sodium bis(fluorosulfonyl)amide (NaFSA) and trimethyl phosphate (TMP) were mixed at a ratio of 1 : 2 (molar ratio) as an electrolyte. The measurement was performed using a two-electrode coin cell composed of a hard carbon electrode and a metal sodium electrode. The temperature was set at 25°C, the voltage range was set at 2.5 V to 0.01 V, the number of cycles was set at 5, the maximum capacity was set at 500 mAh/g, and the current value was set at 25 mA/g based on the weight of the hard carbon electrode. The resulting voltage-capacity curve is shown in Fig. 1.

As shown in Fig. 1, the capacity derived from the insertion and desorption of sodium ions to and from the hard carbon electrode was found in a region of 1 V or less. In the first cycle, an irreversible capacity of about 87 mAh/g derived from the formation of a protective coating on the surface of the hard carbon electrode by partial reductive decomposition of the electrolyte solution was confirmed. On the other hand, in the second cycle and thereafter, the irreversible capacity disappears, indicating that the reversible sodium ion insertion/desorption reaction to/from hard carbon proceeds. This result demonstrates that the hard carbon electrode conventionally considered to have low reversibility in the sodium-based electrolyte solution reversibly proceeded in the electrolyte solution.

As a comparative example, Fig. 2 shows the results of constant current charge/discharge measurement under the same conditions except that an electrolyte solution in which the mixing molar ratio of NaFSA and TMP was 1 : 3 was used. As shown in Fig. 2, while the capacity derived from the insertion and desorption of sodium ions to and from the hard carbon electrode was found in a region of 1 V or less, the voltage flat portion in the region around 1 V which was not observed in the electrolyte solution with a molar ratio NaFSA : TMP of 1 : 2 in the first cycle, and the irreversible capacity in the first cycle increased greatly to about 249 mAh/g. This indicates that many side reactions such as reductive decomposition of the electrolyte solution occur, and demonstrates that the reduction of the sodium salt concentration greatly reduces reaction reversibility.

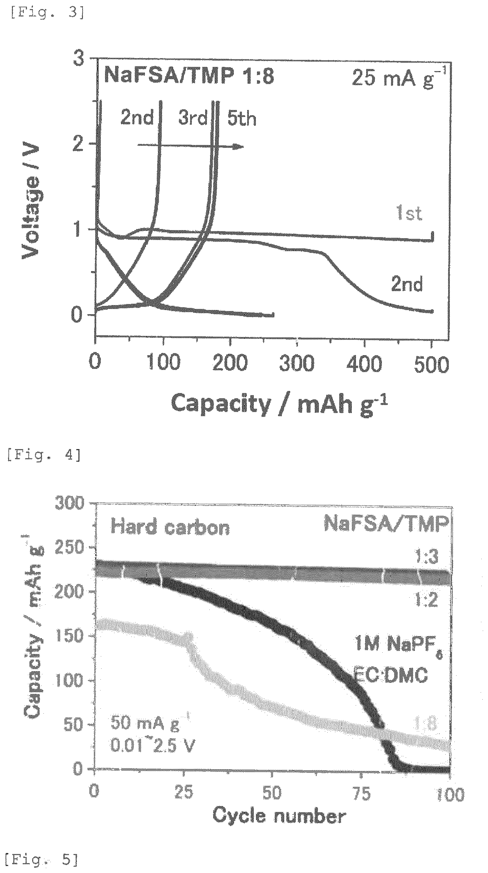

As a comparative example, Fig. 3 shows the results of constant current charge/discharge measurement under the same conditions except that an electrolyte solution in which the mixing molar ratio of NaFSA and TMP was 1 : 8 was used. As shown in Fig. 3, in the first cycle, a large voltage flat portion was observed in the region around 1 V and did not drop below 1 V even after flowing the electric amount of 500 mAh/g set as the maximum capacity, and sodium ions could not be inserted into the hard carbon electrode. This indicates that a side reaction such as reductive decomposition of the electrolyte solution is continuously occurring, indicating that the amount of side reactions greatly increases by further decreasing the sodium salt concentration. From these results, it was demonstrated that the high reaction reversibility of the hard carbon electrode that was observed when using NaFSA/TMP (molar ratio 1 : 2) electrolyte solution was due to the presence of a high-concentration sodium salt.

In order to investigate the influence of the composition of the electrolyte solution on the reaction reversibility of the hard carbon electrode, a two-electrode coin cell composed of a hard carbon electrode and a metal sodium electrode was constructed, and a constant current charge/discharge cycle test was performed for 100 cycles. As the electrolyte, NaFSA/TMP electrolyte solutions (molar ratios 1 : 2, 1 : 3, and 1 : 8) and 1 mol/L NaPF₆/ethylene carbonate (EC):dimethyl carbonate (DMC) (solvent mixing ratio 1 : 1 (volume ratio)) generally used as an electrolyte solution for a sodium battery were used. The temperature was set at 25°C, the voltage range was set at 2.5 V to 0.01 V, and the current value was set at 50 mA/g based on the weight of the hard carbon electrode. The resulting number of cycles vs. capacity plot is shown in Fig. 4.

As shown in Fig. 4, when 1 mol/L NaPF₆/EC:DMC (solvent mixing ratio 1 : 1 (volume ratio)) which is generally used as an electrolyte solution for a sodium battery was used, the capacity tended to decrease as charge/discharge cycles were repeated, and the capacity became 0 mAh/g before reaching 100 cycles. Next, when a low concentration NaFSA/TMP (molar ratio 1 : 8) electrolyte solution was used, the capacity tended to decrease as charge/discharge cycles were repeated. On the other hand, when NaFSA/TMP (molar ratios 1 : 3 and 1 : 2) electrolyte solutions were used, no decrease in capacity was observed even when charging/discharging was repeated for 100 cycles. Therefore, it is possible to extend the cycle life of sodium batteries, by using the electrolyte solution of the present invention.

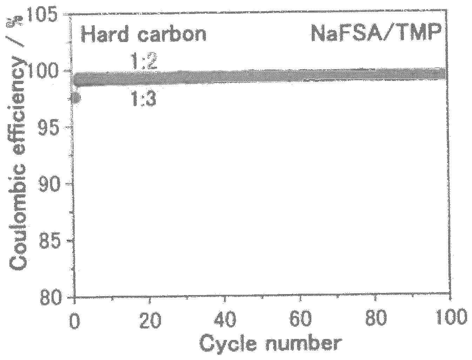

Coulombic efficiency was calculated to confirm reaction reversibility for hard carbon/metal sodium cell using NaFSA/TMP (molar ratios 1 : 3 and 1 : 2) electrolyte solutions in which capacity deterioration was not observed up to 100 cycles. Here, the Coulombic efficiency is defined by the discharge capacity (sodium ion desorption capacity)/charge capacity (sodium ion insertion capacity) and is an indicator of reaction reversibility. The resulting number of cycles vs. Coulombic efficiency plot is shown in Fig. 5.

As shown in Fig. 5, it can be seen that a Coulombic efficiency of 99% or more is maintained up to 100 cycles after the first several cycles including the irreversible capacity derived from side reaction such as reductive decomposition of the electrolyte solution. This indicates that it is possible to improve the charge and discharge efficiency of sodium batteries, by using the electrolyte solution of the present invention.

This result shows that, even when TMP, a flame-retardant organic solvent that has been considered to have an adverse effect on the reversibility of the charge-discharge reaction, is used as a single solvent, the reaction reversibility can be drastically improved in the case of an electrode configuration using a hard carbon negative electrode, by having a high-concentration NaFSA/TMP composition. This demonstrates that the poorly soluble solvent system electrolyte solution of the present invention can achieve a secondary battery having excellent battery characteristics such as high safety and long life.

## Claims

1. An electrolyte solution for a secondary battery comprising a flame-retardant organic solvent as a main solvent and an alkali metal salt, wherein
the composition of the electrolyte solution is such that the solvent amount is 4 mol or less per 1mol of the alkali metal salt,
the ratio of the flame-retardant organic solvent in the total solvent is 50 to 100 mol%,
the flame-retardant organic solvent is a phosphate triester, and
an anion constituting the alkali metal salt is bis (fluorosulfonyl) amide ([N(FSO₂)₂]⁻).

2. The electrolyte solution for a secondary battery according to claim 1, wherein the flame-retardant organic solvent is trimethyl phosphate or triethyl phosphate.

3. The electrolyte solution for a secondary battery according to claim 1 or 2, wherein the alkali metal salt is a lithium salt or a sodium salt.

4. The electrolyte solution for a secondary battery according to any one of claims 1 to 3, wherein the secondary battery is a lithium ion secondary battery or a sodium ion secondary battery.

5. A secondary battery comprising a positive electrode, a negative electrode, and the electrolyte solution for a secondary battery according to any one of claims 1 to 4.

6. The secondary battery according to claim 5, which is a sodium ion secondary battery.

7. The secondary battery according to claim 6, wherein the positive electrode is a transition metal oxide.

8. The secondary battery according to claim 6 or 7, wherein the negative electrode is hard carbon.

9. The secondary battery according to claim 5, which is a lithium ion secondary battery.

10. The secondary battery according to claim 9, wherein the positive electrode contains an active material selected from a metal oxide having a lithium element, a polyanion-based compound, or a sulfur-based compound.

11. The secondary battery according to claim 9 or 10, wherein the negative electrode contains an active material selected from a carbon material, metal lithium, lithium alloy, or lithium metal oxide.

## Patentansprüche

1. Eine Elektrolytlösung für eine Sekundärbatterie, umfassend ein flammhemmendes organisches Lösungsmittel als Hauptlösungsmittel und ein Alkalimetallsalz, wobei
die Zusammensetzung der Elektrolytlösung eine solche ist, dass die Lösungsmittelmenge 4 Mol oder weniger pro 1 Mol des Alkalimetallsalzes beträgt,
das Verhältnis des flammhemmenden organischen Lösungsmittels in dem Gesamtlösungsmittel 50 bis 100 Mol-% beträgt,
das flammhemmende organische Lösungsmittel ein Phosphattriester ist, und
ein Anion, welches das Alkalimetallsalz bildet, Bis(fluorosulfonyl)amid ([N(FSO₂)₂]⁻) ist.

2. Die Elektrolytlösung für eine Sekundärbatterie nach Anspruch 1, wobei das flammhemmende organische Lösungsmittel Trimethylphosphat oder Triethylphosphat ist.

3. Die Elektrolytlösung für eine Sekundärbatterie nach Anspruch 1 oder 2, wobei das Alkalimetallsalz ein Lithiumsalz oder ein Natriumsalz ist.

4. Die Elektrolytlösung für eine Sekundärbatterie nach einem der Ansprüche 1 bis 3, wobei die Sekundärbatterie eine Lithium-Ionen-Sekundärbatterie oder eine Natrium-Ionen-Sekundärbatterie ist.

5. Eine Sekundärbatterie, umfassend eine positive Elektrode, eine negative Elektrode und die Elektrolytlösung für eine Sekundärbatterie nach einem der Ansprüche 1 bis 4.

6. Die Sekundärbatterie nach Anspruch 5, die eine Natriumionen-Sekundärbatterie ist.

7. Die Sekundärbatterie nach Anspruch 6, wobei die positive Elektrode ein Übergangsmetalloxid ist.

8. Die Sekundärbatterie nach Anspruch 6 oder 7, wobei die negative Elektrode Hartkohlenstoff ist.

9. Die Sekundärbatterie nach Anspruch 5, die eine Lithium-Ionen-Sekundärbatterie ist.

10. Die Sekundärbatterie nach Anspruch 9, wobei die positive Elektrode ein aktives Material enthält, ausgewählt aus einem Metalloxid mit einem Lithiumelement, einer polyanionbasierenden Verbindung oder einer Verbindung auf Schwefelbasis.

11. Sekundärbatterie nach Anspruch 9 oder 10, wobei die negative Elektrode ein aktives Material enthält, ausgewählt aus einem Kohlenstoffmaterial, Metalllithium, Lithiumlegierung oder Lithiummetalloxid.

## Revendications

1. Solution d'électrolyte pour une pile secondaire comprenant un solvant organique retardateur de flammes comme un solvant principal et un sel de métal alcalin, dans lequel
la composition de la solution d'électrolyte est telle, que la quantité de solvant est 4 mol ou moins par 1 mol du sel de métal alcalin,
le rapport du solvant organique retardateur de flammes dans le solvant total est compris entre 50 et 100 mol%,
le solvant organique retardateur de flammes est un triester phosphorique, et un anion, qui constitue le sel de métal alcalin, est bis(fluorosulfonyle)amide ([N (FSO2)2]⁻).

2. Solution d'électrolyte pour une pile secondaire selon la revendication 1, dans lequel le solvant organique retardateur de flammes est du phosphate de triméthyle ou du phosphate de triéthyle.

3. Solution d'électrolyte pour une pile secondaire selon la revendication 1 ou la revendication 2, dans lequel le sel de métal alcalin est un sel de lithium ou un sel de sodium.

4. Solution d'électrolyte pour une pile secondaire selon l'une quelconque des revendications 1 à 3, dans lequel la pile secondaire est une pile secondaire au lithium-ion ou une pile secondaire au sodium-ion.

5. Pile secondaire comprenant une électrode positive, une électrode négative et la solution d'électrolyte pour une pile secondaire selon l'une quelconque des revendications 1 à 4.

6. Pile secondaire selon la revendication 5, qui est une pile secondaire au sodium-ion.

7. Pile secondaire selon la revendication 6, dans lequel l'électrode positive est un oxyde de métal de transition.

8. Pile secondaire selon la revendication 6 ou la revendication 7, dans lequel l'électrode négative est du carbone dur.

9. Pile secondaire selon la revendication 5, qui est une pile secondaire au lithium-ion.

10. Pile secondaire selon la revendication 9, dans lequel l'électrode positive contient un matériau actif sélectionné parmi un oxyde métallique ayant un élément de lithium, un composé à base d'un polyanion ou un composé à base de soufre.

11. Pile secondaire selon la revendication 9 ou la revendication 10, dans lequel l'électrode négative contient un matériau actif sélectionné parmi un matériau de carbone, un lithium métal, un alliage de lithium ou un oxyde métallique de lithium.
